Europäisches Patentamt

European Patent Office

Office européen des brevets

(11) Publication number: **0 481 564 B1**

## EUROPEAN PATENT SPECIFICATION

(45) Date of publication of patent specification: **25.01.95**   (51) Int. Cl.⁶: **C09K 5/06**, C08L 23/08, C08L 91/00

(21) Application number: **91202657.2**

(22) Date of filing: **14.10.91**

(54) **Oily matter containing heat storage material and manufacturing method thereof.**

(30) Priority: **15.10.90 JP 277165/90**
**28.01.91 JP 8774/91**
**20.06.91 JP 148971/91**

(43) Date of publication of application:
**22.04.92 Bulletin 92/17**

(45) Publication of the grant of the patent:
**25.01.95 Bulletin 95/04**

(84) Designated Contracting States:
**DE FR GB**

(56) References cited:
**EP-A- 0 126 248**
**WO-A-87/03290**

(73) Proprietor: **MATSUSHITA ELECTRIC WORKS, LTD.**
**1048, Oaza-Kadoma**
**Kadoma-shi**
**Osaka 571 (JP)**

(72) Inventor: **Sei, Mikio**
**c/o Matsushita Elec. Works, Ltd.,**
**1048 Oaza-Kadoma**
**Kadoma-shi,**
**Osaka 571 (JP)**

Inventor: **Kaneoka, Kenji**
**827, 16-3, Joshoji-cho**
**Kadoma-shi,**
**Osaka 571 (JP)**
Inventor: **Urano, Tadashi**
**c/o Matsushita Elec. Works, Ltd.,**
**1048 Oaza-Kadoma**
**Kadoma-shi,**
**Osaka 571 (JP)**
Inventor: **Maruo, Katsuhiko**
**c/o Matsushita Elec. Works, Ltd.,**
**1048 Oaza-Kadoma**
**Kadoma-shi,**
**Osaka 571 (JP)**
Inventor: **Tsurugi, Mitsuhiro**
**c/o Matsushita Elec. Works, Ltd.,**
**1048 Oaza-Kadoma**
**Kadoma-shi,**
**Osaka 571 (JP)**

(74) Representative: **Kupecz, Arpad et al**
**Octrooibureau Los en Stigter B.V.**
**Postbox 20052**
**NL-1000 HB Amsterdam (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

**Description**

This invention relates to an oily matter carrier and a method for manufacturing the same.

The oily matter carrier of the kind referred to finds its utility specifically when used as a heat storage member in the event where oily matter has a melting point, and as an elastic member employed in mats and the like in the event where the oily matter is in liquid state.

Various oily matter carriers have been suggested for rendering the liquid oily matter to be a solid body generally by having the oily matter carried by a substrate, one of which carriers is formed in particular by having such oily matter as paraffin or the like carried by a resin to be utilized as a heat storage member. For inventions relating to the heat storage member of the kind referred to, there may be enumerated U.S. Patent No. 4,711,813 to E.O. Seylier et al, European Patent Application No. 0 412 021 A1 of C. Momose et al, and Japanese Patent Laid-Open Application No. 59-170180 of T. Kobayashi et al.

The heat storage members according to these inventions are generally latent heat storage members in which the latent heat required for phase transition between solid phase and liquid phase of the oily matter, but such latent heat storage members still involve a problem in respect of the usage. That is, the latent heat storage members are required to be arranged for preventing the oily matter from flowing out in the event when the oily matter has performed its phase transition to be liquid, and the latent heat storage members of the kind referred to are normally housed within a container formed by a metal, resin or the like material. When, on the other hand, a mixture of polyethylene with paraffin as the latent heat storage member to have polyethylene impregnated with paraffin is employed, the member will not become liquid even when paraffin is caused to be melted, to be capable of being treated as a solid member. Thus, the foregoing U.S. Patent 4,711,813 employs a crosslinked high density polyethylene, EP Application 0 412 021 A1 shows to use a mixture of hydrocarbon rubber and polyolefin or thermoplastic elastomer, and Japanese Patent Laid-Open Application No. 59-170180 employs an ultra-high-molecular-weight polyethylene, together with such oily matter as paraffin.

In these known oily matter carriers, however, there has been still involved a problem that such oily matter as paraffin is caused to exude.

SUMMARY OF THE INVENTION

A primary object of the present invention is, therefore, to provide an oily matter carrier capable of overcoming the foregoing problem and restricting the exudation of the oily matter out of the carrier, as well as a method for manufacturing such carrier.

According to the present invention, the object can be realized by an oily matter carrier in which an oily matter is carried by a substrate consisting of a synthetic resin, characterized in that the substrate comprises as a main component an ethylene-$\alpha$-olefin copolymer of a smaller density than 0.925g/cm$^3$, the oily matter being dispersed within the substrate.

According to the present invention, further, there is provided a method for obtaining the oily matter carrier by mixing the oily matter as melt with the ethylene-$\alpha$-olefin copolymer.

Other objects and advantages of the present invention shall become clear as the description of the invention advances in the followings with reference to respective examples of the invention.

BRIEF DESCRIPTION OF THE DRAWINGS

FIGURE 1 is a diagram showing temperature conditions under which cold and hot tests have been carried out with respect to a group of working aspects of the oily matter carrier according to the present invention and other comparative examples;

FIG. 2 is a diagram showing temperature change in the oily matter carrier according to the present invention when subjected to varying temperatures of the atmosphere; and

FIG. 3 is a diagram showing temperature conditions under which the cold and hot tests have been carried out with respect to another group of working aspects of the oily matter carrier according to the present invention and further comparative examples.

The present invention shall now be described with reference to respective examples.

DETAILED DESCRIPTION OF THE PREFERRED EMBODIMENTS

According to one of remarkable features of the present invention, an ethylene-$\alpha$-olefin copolymer having a smaller density than 0.925g/cm$^3$ (which shall be referred to hereinafter as "copolymer A") is employed as the substrate, and an oily matter showing preferably a compatibility with the copolymer A is mixed as melted with the copolymer A to be dispersed therein substantially uniformly.

In this case, it is also preferable that, for maintaining a given form and to elevate the strength of the oily matter carrier, one or more than two of ethylene-$\alpha$-olefin copolymer of a larger density than that of the copolymer A (which shall be hereinafter referred to as "copolymer B"), medium-density polyethylene and high-density polyethylene will be added to the copolymer A as admixed therewith. It is also preferable that the oily matter is dispersed within a substrate which comprises the copolymer A and another resin added, that is, two types of resins, and thereafter an inorganic filler is further dispersed in the substrate.

When, in the above, the density of the copolymer exceeds the predetermined value 0.925g/cm$^3$, it becomes difficult to restrict the exudation of the oily matter out of the carrier, while the density of the copolymer A less than 0.89g/cm$^3$ causes the transparency of the oily matter in liquid state to be hardly maintainable. Further, when the copolymer B has a density less than that of the copolymer A, it is impossible to increase the form retention effect even when the copolymer B is added to the copolymer A. Further, a use of one having a less density than 0.89g/cm$^3$ as the copolymer A causes the crystallizability of the substrate to be lowered, and it is effective to add the copolymer B for the purpose of attaining the form retention and the strength increasing ability. At this time, the density of the copolymer B should preferably be made more than 0.910g/cm$^3$.

While as in the above the copolymers A and B are made different in the density, it is possible to employ a substrate made by ethylene copolymerized with such $\alpha$-olefin as propylene, butene-1, pentane, hexene-1, 4-methylpentene-1, octene-1 or the like so that $\alpha$-olefin will be at a composition of several mol%, though not to be limited thereto. As the $\alpha$-olefin of the copolymer A to be copolymerized, propylene or butene-1 is particularly preferable.

Respective density values of the medium-density and high-density polyethylenes are based on the provision of JIS-K6760. That is, the medium-density polyethylene is of a value more than 0.930g/cm$^3$ and less than 0.942g/cm$^3$, and the high-density polyethylene is more than 0.942g/cm$^3$. While it would be considered possible to use a high-pressure-processed and low-density polyethylene instead of the medium-density and high-density polyethylene, it has been found that such use renders the oily matter carrier eventually formed to be hardly possible to retain its form.

For the oily matter, it is desirable to employ such one having a compatibility with the substrate to be formed with the copolymer A, copolymer B, medium-density polyethylene and high-density polyethylene as, practically, hydrocarbon (paraffin and paraffin wax) or one or more of aliphatic acids and aliphatic acid esters (which shall be hereinafter referred to as "aliphatic acids"). In an event where the oily matter shows the crystallizability, such oily matter will be useful as the heat storage member, and one having a proper melting or solidifying point may be employed depending on, for example, storing and/or discharging temperature of the heat storing member. In this case, the melting point of the oily matter should be below the melting point of a substance or substances forming the substrate, that is, either one or more of the copolymer A, copolymer B, medium-density polyethylene and high-density polyethylene and, when the substrate consists of more than two substances, the oily matter should be of the melting point below that of at least one of them. It is also preferable that the latent heat accompanying the crystalline transformation of the oily matter will be at least 20Kcal/kg.

Further, in the present invention, the mixing ratio of the oily matter with the high molecular material, that is, the synthetic resin which forming the substrate, or in other words the copolymer A and either one or more of the copolymer B and medium-density and high-density polyethylenes, may be properly set depending on the use and so on of the oily matter carrier, and it is preferable, while not to be specifically limited, that the ratio of the synthetic resin is more than 10 weight% provided that the total of the synthetic resin and oily matter will be 100 weight%, from a viewpoint of sufficiently maintaining the ability of carrying the oily matter. Further, in the event when the oily matter carrier is used as the heat storing member, the composition of the synthetic resin and oily matter should be selected to be in a range of

| the synthetic resin: | 10 to 70wt.% |
|---|---|
| the oily matter: | 30 to 90wt.% |

from a viewpoint of maintaining the heat storing ability and the oily matter carrying ability as well. When the ratio of the synthetic resin is below the above range, there arises a risk that the exudation increases and, when the ratio becomes above the range, there arises another risk that the quantity of storage heat becomes too small. When it is desired, in this case, to decrease the exudation, the ratio of the synthetic resin should preferably be made more than 23wt.%. Further, when the copolymer B, the medium-density polyethylene or the high-density polyethylene is added to the copolymer A, it is optimum that, among the total 10wt.% of the synthetic resins in the whole of 100wt.%, the copolymer A is made more than 5wt.%. Here, in the event when the oily matter carrier is used as the heat storage member and the total of synthetic resins will be in a range of 10 to 70wt.%., the composition should be such that

| the copolymer A: | 5 to 70wt.% |
| the total of copolymer B, medium-density polyethylene, and/or high-density polyethylene: | 0 to 65wt.% |

When the composition of the copolymer A is less than that in the above range, there arises a risk that the exudation increases, while the composition more than the above range, there arises another risk that the quantity of storage heat becomes too small. When the addition of the copolymer B, medium-density polyethylene and/or high-density polyethylene is made more than the above range, there arises a risk that the quantity of heat storage is decreased.

Further, according to another feature of the present invention, it is preferable that an inorganic filler is dispersed in the mixture of the synthetic resin or resins forming the substrate with the oily matter in order to decrease the exudation of the oily matter out of the carrier. With this dispersion of the inorganic filler, further, the oily matter carrier in the case when used as the heat storage member can be increased in the thermal conductivity. For the inorganic filler, it is possible to employ, for example, at least one selected from a metal, metellic salt and carbon black, which are considerably higher in the thermal conductivity than those of the oily matter and such synthetic resins as the copolymer A and so on.

For the shape of the inorganic filler, any of particulate, fibrous, flaky, honeycomb and the like shaped ones may be selectively employed, and the shape as well as the dimension should not be specifically limited. For the metallic salt, it may be possible to enumerate metallic hydroxide, alumina, silica, talc, cray, bentonite and the like. When a metal is employed as the inorganic filler, it is possible to reduce the exudation while increasing the thermal conductivity even with a considerably smaller amount of the addition than that of some other filler than the metallic filler. Further, when the oily matter is the one having a melting point, it is made possible to render the thermal conductivity to be low at a temperature above the melting point but to be high at a temperature below the melting point, due to thermal expansion and contraction accompanying the phase transition at temperatures above and below the melting point. When on the other hand the metallic hydroxide is employed as the inorganic filler, it is possible to lower the flammability of the oily matter carrier, that is, to render the oily matter carrier to be uneasy to burn. The metallic hydroxide is demanded to be stable at a temperature of the melting point of the copolymers A and B, medium-density polyethylene, high-density polyethylene and to be capable of generating water when heated to be at a further higher temperature, and such metallic hydroxide as aluminum hydroxide, magnesium hydroxide and the like may be employed.

The mixing ratio of the inorganic filler into the oily matter carrier should be properly set taking into consideration the degree of the exudation. While not required to be limited specifically, it may be possible to add the inorganic filler at 1 to 200 parts by weight when the oily matter carrier is used as the heat storage member and provided that the total of the oily matter and synthetic resins (the copolymer A and the copolymer B, medium-density polyethylene or high-density polyethylene added as demanded to the copolymer A) is made 100 parts by weight. When the mixture ratio of the inorganic filler exceeds the foregoing range, there arises a risk that the quantity of the heat storage is excessively lowered.

For the dispersion of the oily matter in the synthetic resin, while not required to be restricted, it may be realized by, for example, kneading them together by means of a kneader or the like at a temperature above the melting point of the copolymers A and B and so on, through which processing a uniform molten mixture of the synthetic resins and oily matter can be smoothly prepared, and it is also possible to form the mixture into any desired form.

In a following TABLE I, there are shown examples of ethylene-$\alpha$-olefin copolymer and polyethylene as well which are employed in later described Examples and Comparative Examples, together with their item numbers, types of $\alpha$-olefin, their density as provided by JIS-K6760 and their melting points. In a following TABLE II, there are shown further various synthetic resins employed in later described Comparative Examples, together with their item numbers. In a further TABLE III, there are shown various oily matters employed in the later described Examples and Comparative Examples, together with their item numbers, types, chemical structures, melting points and latent heat.

4

TABLE I

| Type-α-olefin polyethylene | Item Number | Density (g/cm³) | Melting Point (°C) |
|---|---|---|---|
| Straight-chain high density polyethylene | 6006M | 0.957 | 135 |
| Ultra-high-molecular-weight polyethylene | 240M | 0.936 | 130 |
| Butene-1 | F15 | 0.925 | 124 |
| High-pressure low-density polyethylene | F101-1 | 0.921 | 111 |
| Butene-1 | VL100 | 0.900 | 115 |
| Butene-1 | EUL130 | 0.890 | 115 |
| Silane-modified cross-linked polyethylene | HF44X | 0.958 | 135 (Before being) (crosslinked) |
| Propylene | TOUGHMER PO680 | 0.870 | (No melting point as being non-crystalline) |
| Butene-1 | TOUGHMER A4085 | 0.880 | 80 |
| Hexene-1 | ZF150-1 | 0.930 | 123 |

TABLE II

| Type of Synthetic Resin | Item Number |
|---|---|
| Polypropylene | AV664B |
| Ethylene-vinyl acetate copolymer | 633 |
| Ethylene-ethyl acrylate copolymer | NUC8027 |
| Butyl rubber | Butil 268 |
| Styrene-butadiene rubber | SL555 |
| Isoprene rubber | IR2200 |
| Ethylene-propylene rubber | 301 |

TABLE III

| Oily Matter | Type | Chemical Structure | Melting Point (°C) | Latent Heat (Kcal/kg) |
|---|---|---|---|---|
| Alkyl hydrocarbon | Paraffin 125 article | $C_nH_{2n+2}$ (avg.n fig.26) | 52 | 42 |
| Aliphatic acids | Butyl stearate | $C_{17}H_{35}COOC_4H_9$ | 24 | 30 |
| Aliphatic acids | Butyl palmitate | $C_{15}H_{31}COOC_4H_9$ | 15 | 34 |
| Aliphatic acids | Capric acid | $C_9H_{19}COOH$ | 31 | 36 |

In the above Table I, the item number "6006M" denotes a straight-chain high-density polyethylene made by a Japanese manufacturer SHOWA DENKO K.K., "240M" denotes an ultra-high-molecular-weight polyethylene made by a Japanese manufacturer MITSUI SEKIYU KAGAKU KOGYO K.K., "F15" denotes an ethylene-α-olefin copolymer (α-olefin being butene-1) made by a Japanese manufacturer TOSO K.K., "E101-1", "VL100" and "EUL130" are respectively an ethylne-α-olefin copolymer (α-olefin being butene-1) manufactured by a Japanese manufacturer SUMITOMO KAGAKU KOGYO K.K., "HF44X" denotes a silane-modified crosslinked polyethylene (gel component ratio 40wt.%) made by a Japanese firm MITSUBISHI YUKA K.K., "TOUGHMER PO680" is an ethylene-α-olefin copolymer (α-olefin being propylene) made by a Japanese manufacturer MITSUI SEKIYU KAGAKU KOGYO K.K., "TOUGHMER A4085" is an ethylene-α-olefin copolymer (α-olefin being butene-1) also made by the above MITSUI SEKIYU, and "ZF150-1" is an ethylene-α-olefin copolymer (α-olefin being hexene-1) made also by the above TOSO.

Further, in the above Table II, the item number "AV6648" is a polypropylene made by the above SUMITOMO KAGAKU, "633" is an ethylene-vinyl acetate copolymer made by the above TOSO, "NUC8027" is an ethylene-ethyl acrylate copolymer made by a Japanese manufacturer NIPPON UNICAR K.K., "BUTIL 268" is a butyl rubber made by a Japanese manufacturer NIPPON GOSEI GOMU K.K., "SM550" is a styrene-butadiene rubber also by the foregoing NIPPON GOSEI GOMU, "IR2200" is an isoprene rubber also by the foregoing NIPPON GOSEI GOMU, and "301" is an ethylene-propylene-diene rubber by the foregoing SUMITOMO KAGAKU.

In the above Table III, the type "paraffin 125 article" is a crystalline alkyl hydrocarbon made by a Japanese manufacturer NIPPON SEIRO K.K.

EXAMPLES 1-6:

A resin consisting of such ethylene-α-olefin copolymer as shown in a following Table IV was kneaded with a kneader of PBV-0.1H made by a Japanese manufacturer IRIE SHOKAI while being heated at 140°C, paraffin 125 article of NIPPON SEIRO was gradually added so as to be of such compositions as shown in Table IV, the kneading was kept continued for 20 minutes after the addition of paraffin 125 article, and thereafter thus kneaded and melted mixture was molded into pellets of a diameter of 1mm amd a length of 2mm while being cooled at a cooling rate of 1°C/minute, whereby the oily matter carriers wherein paraffin 125 article was uniformly dispersed in the ethylene-α-olefin copolymer were obtained.

COMPARATIVE EXAMPLES 1-6:

With such synthetic resins as shown in the following Table IV employed, the oily matter carriers were obtained in the same manner as in Examples 1-6 so as to be of such compositions as shown in Table IV.

COMPARATIVE EXAMPLE 7:

Such silane-modified crosslinked polyethylene as shown in the following Table IV was molded into pellets and thereafter immersed for 60 minutes in the paraffin 125 article of NIPPON SEIRO heated to be about 140°C and was thereafter taken out, whereby the silane-modified crosslinked polyethylene was swelled with the impregnating paraffin 125 article, and an oily matter carrier of a diameter of 2mm and the length of 2mm was obtained at such composition as shown in Table IV.

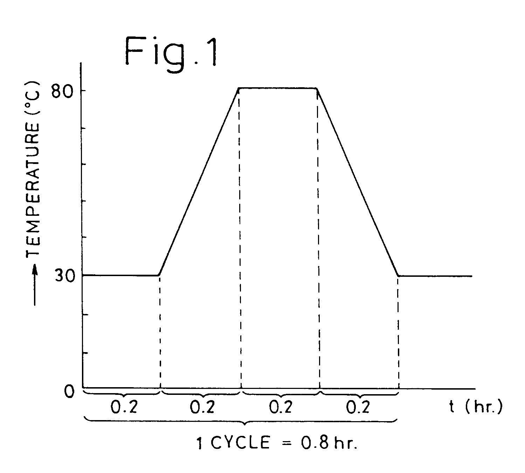

The oily matter carriers obtained through the above Examples 1-6 and Comparative Examples 1-7 were subjected to a cold and hot test carried out in an atmosphere under such temperature conditions as shown in FIG. 1 for 200 cycles (each cycle being 0.8 hours), thereafter the oily matter carriers were taken out of the atmosphere, any paraffin exuded out of the oily matter carrier at a temperature of 80°C higher than the melting point of paraffin 125 article was wiped off, and the exudation rate was calculated from the weight lost, upon which the exudation rate was obtained as based on a formula (lost weight of the oily matter carriers/initial oily matter content) x 100(%), and the results were also as shown in the following Table IV.

TABLE IV

| Ex. No. | Synthetic Resin Item No. | Synth. Resin Comp. (%) | Paraffin Comp. (%) | Exudation Rate (%) |
|---|---|---|---|---|
| 1 | VL100 | 20 | 80 | 7 |
| 2 | VL100 | 30 | 70 | 2 |
| 3 | EUL130 | 20 | 80 | 1 |
| 4 | EUL130 | 30 | 70 | 0.6 |
| 5 | VL100 | 23 | 77 | 4 |
| 6 | EUL130 | 23 | 77 | 0.8 |
| **Comp. Ex. No.** | | | | |
| 1 | 6006M | 30 | 70 | 9 |
| 2 | 240M | 20 | 80 | 21 |
| 3 | F15 | 30 | 70 | 12 |
| 4 | F101-1 | 30 | 70 | - |
| 5 | 633 | 30 | 70 | 20 |
| 6 | NUC8027 | 30 | 70 | 5 |
| 7 | HF44X | 30 | 70 | 8 |

In the above Table IV, the compositions of the synthetic resins and oily matter are at the weight ratio. In the case where the high-pressure-processed low-density polyethylene (F101-1) was employed for the synthetic resin as the substrate in Comparative Example 4, the crystallization was hindered by paraffin 125 article, the carrier could not be formed in the pellet but rather broke loose, and the exudation could not be measured. Further, in a case of Comparative Example 2 in which 30wt.% of the ultra-high-molecular-weight polyethylene and 70wt.% of paraffin 125 article were mixed, the mixture was unable to be kneaded by any ordinary kneader due to a large melting viscosity of the ultra-high-molecular-weight polyethylene, and it was difficult to mold the mixture into a complete pellet shape.

In this case, it has been found as a result of the above examples that, when the density of the ethylene-$\alpha$-olefin copolymer becomes less than 0.925g/cm$^3$, the exudation rate of paraffin 125 article was remarkably lowered. When comparison was made with the ones of the paraffin content was 70wt.%, the exudation rate of the oily matter carriers employing such resins as VL100 and EUL130 having a less density than 0.925g/cm$^3$ was 2.0% and 0.6% whereas the exudation rate of the ones employing the resins of the density of more than 0.925g/cm$^3$ was 8 to 13%. Even in the case where the paraffin content was increased to 80wt.%, the exudation rate in the oily matter carriers employing VL100 and EUL130 was 7% and 1%, and it has been found that the exudation rate could be remarkably reduced, in contrast to the exudation rate of 21% for an oily matter carrier employing 240M with the same amount of paraffin made to be contained. In the cases of Comparative Examples 5 and 6 in which such thermoplastic elastomers as 633 and NUC8027 were employed, the exudation rate was 20% and 5%, it has been found that, while Comparative Example 6 has shown a lowered exudation rate as compared with Comparative Examples 1-5, the use of VL100 and EUL130 as in the above still results in a lower exudation.

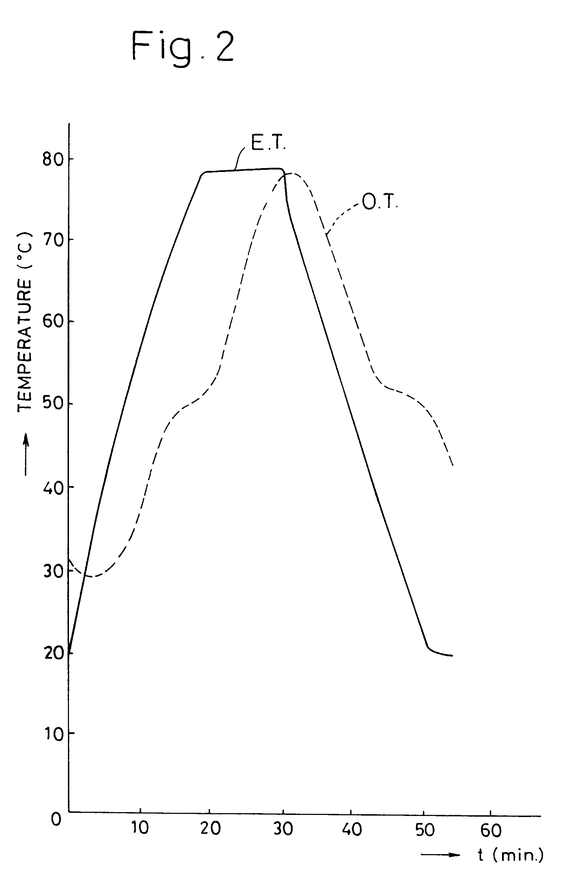

In FIG. 2, there are shown temperature variations in the oily matter carrier of Example 2 obtained with 30wt.% of VL100 contained and subjected to the atmospheric temperature change from 20°C to 80°C. As will be clear from FIG. 2, the particular oily matter carrier has the same melting point (about 52°C) as the containing oily matter (paraffin 125 article), and has caused no change in the heat storing action of paraffin by mixing paraffin with ethylene-$\alpha$-olefin. This has been also confirmed by means of differential scanning calorimetry (DSC). Similar results have been obtained with respect to further oily matter carriers employing other synthetic resins, and it has been found that the oily matter carriers of these Examples involve no change in the heat storing action of paraffin and are useful as the heat storing member.

EXAMPLES 7-16:

Such resins consisting of ethylene-$\alpha$-olefin copolymer as shown in a following Table V were respectively kneaded by means of the kneader PBV-0.1H made by IRIE SHOKAI while being heated at 140°C, such oily matters as shown in Table V were added next respectively gradually so as to be at such composition as shown in Table V and, after the addition of the oily matter, the kneading was kept continued for 20 minutes. Thereafter, each of thus kneaded melts was molded into a board of 200mm long, 200mm wide and 15mm thick while being cooled at a cooling rate of 1°C/minute, and whereby the oily matter carrier in which the oily matter was uniformly dispersed within ethylene-$\alpha$-olefin copolymer as the substrate.

COMPARATIVE EXAMPLES 8-17:

With such synthetic resins as listed in Table V employed, the oily matter carriers were prepared in the same manner as in Examples 7-16 at such compositions as shown in Table V.

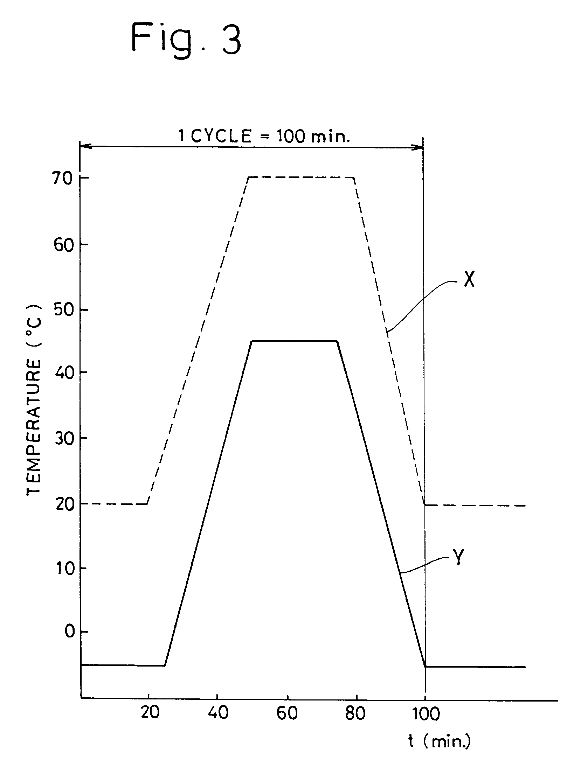

With respect to these oily matter carriers prepared through these Examples 7-16 and Comparative Examples 8-17, a cold and hot test has been carried out for 200 cycles (1 cycle being 100 minutes) within an atmosphere under such temperature conditions as shown in FIG. 3, in which a dotted-line curve X denotes the carriers using paraffin 125 article as the oily matter while a solid-line curve Y represents those employing butyls as the oily matter. After this cold and hot test, the respective oily matter carriers were taken out of the atmosphere, the oily matter exuded out of the carriers at a temperature of 80°C higher than the melting point of the oily matter was wiped off, and the exudation rate was calculated out of reduced weight of the carriers. In this case, the exudation rate was obtained through the formula (lost weight of the oily matter carrier/initial content of the oily matter) x 100(%), and thus obtained results are also listed in Table V.

TABLE V

| Ex.No. | Synth. Resin Item No. | Synth. Resin Comp. (%) | Oily Matter Type | Oily Matter Comp. (%) | Exud. Rate(%) |
|---|---|---|---|---|---|
| 7 | TOUGHMER A4085 | 30 | Paraf. 125 art. | 70 | 0.6 |
| 8 | TOUGHMER PO680 | 30 | Paraf. 125 art. | 70 | 0.3 |
| 9 | VL100 TOUGHMER PO680 | 15 15 | Paraf. 125 art. | 70 | 0.8 |
| 10 | EUL130 | 15 | Paraf. 125 art. | 85 | 9.0 |
| 11 | EUL130 | 65 | Paraf. 125 art. | 35 | 0.1 |
| 12 | EUL130 | 30 | Butyl stearate | 70 | 3.5 |
| 13 | VL100 | 30 | Butyl stearate | 70 | 4.5 |
| 14 | TOUGHMER PO680 | 30 | Butyl stearate | 70 | 0.8 |
| 15 | EUL130 | 30 | Butyl palmitate | 70 | 5.0 |
| 16 | EUL130 | 30 | Capric acid | 70 | 2.8 |

| Comp. Ex.No. | | | | | |
|---|---|---|---|---|---|
| 8 | 6006M | 30 | Butyl stearate | 70 | 16 |
| 9 | 6006M | 30 | Butyl palmitate | 70 | 19 |
| 10 | 6006M | 30 | Capric acid | 70 | 13 |
| 11 | F101-1 | 30 | Butyl stearate | 70 | - |
| 12 | F15 | 30 | Butyl stearate | 70 | 20 |
| 13 | AV664B | 30 | Paraf. 125 art. | 70 | - |
| 14 | Butil 268 | 30 | Paraf. 125 art. | 70 | 10 |
| 15 | SL555 | 30 | Paraf. 125 art. | 70 | 15 |
| 16 | IR2200 | 30 | Paraf. 125 art. | 70 | - |
| 17 | 301 | 30 | Paraf. 125 art. | 70 | 2.0 |

In the above Table V, the composition of the synthetic resin and oily matter is the weight ratio. Incidentally, the ethylene-α-olefin copolymer employed in Examples 7 and 8 has a density of a level lower than $0.88 g/cm^3$ so as to be low in a crystallizability and thus transparent, and the oily matter carrier employing such copolymer as the substrate also has the transparency at a temperature above the melting point of paraffin 125 article, as well as a pliability and elasticity. The ethylene-α-olefin copolymer employed in Example 14 also has a low density of $0.87 g/cm^3$ so as to be low in the crystallizability and thus transparent, and the oily matter carrier with this copolymer used as the substrate is also transparent at a temperature above the melting point of butyl stearate, pliable and elastic. Further, the oily matter carriers prepared through Examples 7-9, 14, 15 and 17 have involved a deformation upon the cold and hot test.

In the case of Comparative Example 11 with the high-pressure processed low-density polyethylene F101-1 employed, Comparative Example 13 with polypropylene employed and Comparative Example 16 with isoprene rubber employed, on the other hand, respective melts were unable to be molded into the board shape and no further test could be carried out.

It has been found that, as will be clear from Table V, the exudation rate is remarkably lowered by mixing the oily matter with the ethylene-α-olefin copolymer of the density smaller than $0.925g/cm^3$. It will be appreciated here that the exudation rate can be lowered even when the same oily matter as that in Comparative Examples 14-17 in which hydrocarbon rubber is used as the substrate is employed and applied to the present invention. Further, the measurement of the heat storing action has been carried out by means of DSC with respect to the respective oily matter carriers of the respective Examples of the present invention, and it has been proved that the heat storing action is sufficiently attained.

EXAMPLES 17-25:

With the synthetic resins consisting of such ethylene-α-olefin copolymers as well as such oily matters as listed in a following Table VI employed so as to be at such compositions as also shown in Table VI, various oily matter carriers were formed in the board shape in the same manner as in Examples 7-16 for all other respects.

COMPARATIVE EXAMPLES 18-24:

Further oily matter carriers were formed in the same manner as in Examples 17-25 with the synthetic resins of Table VI employed.

With respect to the board-shaped oily matter carriers formed through these Examples 17-25 and Comparative Examples 18 and 19, the cold and hot test was carried out for 200 cycles (1 cycle being 100 minutes) in an atmosphere under such temperature conditions as in FIG. 3. After the test, the oily matter carriers were taken out of the atmosphere, the oily matter exuded out of the oily matter carrier at the temperature of 80°C higher than the melting point of the oily matter was wiped off, and the exudation rate was calculated out of the reduced weight of the carriers. The same formula as in the foregoing was based in calculating the exudation rate, and resultant rate was as shown in Table VI.

TABLE VI

| Ex.No. | Copolymer A | | Oily Matter | | Copolymer B Polyethylene | | Exud. Rate (%) |
|---|---|---|---|---|---|---|---|
| | Item No. | Comp.(%) | Type | Comp.(%) | Item No. | Comp.(%) | |
| 17 | Toughmer A4085 | 20 | Paraf. 125 art. | 70 | 6006M | 10 | 1.0 |
| 18 | PO680 | 20 | " | 70 | F15 | 10 | 0.6 |
| 19 | " | 20 | Butyl stearate | 70 | 6006M | 10 | 2.0 |
| 20 | " | 20 | " | 70 | 6006M / F15 | 5 / 5 | 0.8 |
| 21 | " | 7 | Paraf. 125 art. | 68 | 6006M | 25 | 4.1 |
| 22 | " | 60 | " | 33 | " | 7 | 0.1 |
| 23 | " | 8 | " | 85 | " | 7 | 7.0 |
| 24 | " | 20 | Butyl stearate | 70 | 2F150-1 | 10 | 1.1 |
| 25 | " | 15.4 | Paraf. 125 art. | 76.9 | 6006M | 7.7 | 0.8 |
| **Comp.Ex.No.** | | | | | | | |
| 18 | Toughmer PO680 | 20 | Butyl stearate | 70 | F101-1 | 10 | 1.5 |
| 19 | EUL130 | 20 | Paraf. 125 art. | 70 | 6006M | 10 | 1.4 |
| 20 | Butil 268 | 20 | " | 70 | " | 10 | 8.0 |
| 21 | SL555 | 20 | " | 70 | " | 10 | 12 |
| 22 | 301 | 20 | " | 70 | " | 10 | 2.8 |
| 23 | Toughmer PO680 | 20 | " | 70 | AV664B | 10 | 0.7 |
| 24 | 301 | 20 | " | 70 | " | 10 | 2.5 |

In the above Table VI, the copolymer B or polyethylene is the synthetic resin material of the density more than 0.925g/cm$^3$. In these Examples, it has been found that the substrate formed by adding to the copolymer either the copolymer B or the high-density polyethylene has caused no deformation to occur even upon the cold and hot tests or the like, and the carriers were stable in their shape up to the temperatures adjacent to the melting point of the copolymer or the high-density polyethylene. Consequently, it should be appreciated that the instant oily matter carriers are superior than that of the foregoing Example 7, 8 or 14, for example, which causes the deformation to occur, and are capable of lowering the exudation rate more than in the case of the oily matter carrier in which the substrate is formed by mixing the oily matter with the ethylene-α-olefin copolymer of the density more than 0.88g/cm$^3$

11

according to Example 1, 8 or 15, for example. In the cases of Comparative Example 18 wherein the low-density polyethylene is used instead of the high-density polyethylene, Comparative Examples 20 and 21 wherein hydrocarbon rubber is used instead of the copolymer A and Comparative Examples 23 and 24 wherein polypropylene is used instead of the high-density polyethylene, there has been involved the problem of the deformation, and the oily matter carriers of Comparative Examples 20-22 employing the hydrocarbon rubber have shown a remarkable increase in the exudation. Further, it has been proved by the measurement of the heat storing ability carried out by means of the DSC with respect to the oily matter carriers according to the present invention, that the heat storing action is sufficiently attained by these carriers.

EXAMPLES 26-39:

Such ethylene-$\alpha$-olefin copolymers as listed in a following Table VII were respectively kneaded by the kneader of IRIE SHOKAI while being heated at 140°C, such oily matters and inorganic fillers as also listed in Table VII were sequentially and gradually added so as to be at such composition ratios as seen in Table VII, and the kneading was kept continued for 20 minutes after the addition of the inorganic filler. Thereafter. thus kneaded melts were molded into the board shape of 200mm long, 200mm wide and 15mm thick while being cooled at the cooling rate of 1°C/minute, whereby various oily matter carriers in which the oily matter and inorganic filler were uniformly dispersed within the substrate consisting of the ethylene-$\alpha$-olefin copolymer were formed.

## TABLE VII

| Ex. No. | Copolymer A Item No. | Comp.(P.) | Oily Matter Type | Comp.(P.) | Inorg. filler Type | Comp.(P.) | Exud. Rt.(%) | Heat Cond.I (Kcal/mh°C) | Heat Cond.II (Kcal/mh°C) |
|---|---|---|---|---|---|---|---|---|---|
| 26 | EUL130 | 30 | Paraf. 125 art. | 70 | Flaky Al | 5 | 1.0 | 0.25 | 0.24 |
| 27 | " | 30 | " | 70 | " | 10 | 0.8 | 0.36 | 0.33 |
| 28 | " | 30 | " | 70 | " | 20 | 0.4 | 0.52 | 0.48 |
| 29 | " | 30 | " | 70 | " | 30 | 0.3 | 0.69 | 0.62 |
| 30 | VL100 | 30 | " | 70 | Al powder | 30 | 0.9 | 0.40 | 0.35 |
| 31 | EUL130 | 30 | Butyl stearate | 70 | Flaky Al | 30 | 0.5 | 0.70 | 0.64 |
| 32 | " | 30 | " | 70 | Cu powder | 30 | 1.4 | 0.35 | 0.32 |
| 33 | " | 30 | " | 70 | Stainless steel fiber | 30 | 1.4 | 0.30 | 0.27 |
| 34 | " | 30 | Paraf. 125 art. | 70 | Alumina | 30 | 1.0 | 0.22 | 0.22 |
| 35 | " | 30 | " | 70 | Silica | 30 | 0.8 | 0.23 | 0.22 |
| 36 | " | 30 | " | 70 | Carbon black | 30 | 0.8 | 0.24 | 0.23 |
| 37 | " | 30 | " | 70 | Talc | 30 | 0.7 | 0.22 | 0.22 |
| 38 | " | 30 | " | 70 | Cray | 30 | 0.5 | 0.22 | 0.22 |
| 39 | " | 30 | " | 70 | Bentonite | 30 | 0.8 | 0.22 | 0.22 |
| 2 | VL100 | 30 | " | 70 | – | – | 2.3 | 0.19 | 0.20 |
| 4 | EUL130 | 30 | " | 70 | – | – | 1.6 | 0.19 | 0.20 |
| 12 | " | 30 | Butyl stearate | 70 | – | – | 3.5 | 0.19 | 0.19 |

In respect of the inorganic filler as in the above Table VII, the flaky aluminum was of 1mm x 1.2mm x 0.03mm, the aluminum powder was the one passed through 200 mesh filter, the copper powder was the one passed also through 200 mesh filter, the stainless steel fiber was the one of an average diameter of 0.06mm and 15mm long, alumina was of an item number C-31 made by SUMITOMO KAGAKU KOGYO, silica was Nip Seal SS-15 (product name) by a Japanese manufacturer NIPPON SILICA K.K., carbon black was MA600 (item number) of MITSUBISHI KASEI K.K., talc was TALC-31 (trademark) by a Japanese manufacturer NIPPON TALC K.K., cray was CRAY (trademark) by a Japanese manufacturer FUJI LIGHT KOGYO K.K., and bentonite was HOTAKA-JIRUSHI 300 mesh by a Japanese manufacturer K.K. HOJUN YOKO.

13

In Table VII, there are shown concurrently the exudation rate of the board-shaped oily matter carriers according to Examples 26-39, calculated out by carrying out the cold and hot test for 200 cycles (1 cycle being 100 minutes) within the atmosphere under the temperature conditions shown in FIG. 3, thereafter taking out the carriers out of the atmosphere, wiping off the oily matter exuded out of the carrier at the temperature of 80°C above the melting point of the oily matter, and calculating the rate on the basis of lost weight of the carrier. Further, measuring conditions I were attained by maintaining both surfaces of the board-shaped oily matter carrier of the respective Examples respectively at a temperature of 5°C and 20°C to be below the melting point of the oily matter, measuring conditions II were attained by maintaining the both surfaces respectively at a temperature of 55°C and 70°C to be above the melting point of the oily matter, and a heat conductivity measurement was carried out by means of a heat flow metry, the results of which were also as listed in Table VII.

As will be clear when the measurements of Examples 26-39 with the inorganic filler of more than 4.5wt.% are compared with those of the foregoing Examples 2, 4 and 12 employing no inorganic filler mixed, the exudation rate has been remarkably lowered by the presence of the small amount of the inorganic filler, and the heat conductivity could be also increased. In the case of the oily matter carrier in which, for example, 10 parts of the flaky aluminum is added, the heat conductivity was made twice as large as that of the oily matter carrier to which no flaky aluminum was added. Further, in the case when the metal filler is added, the heat conductivity at the temperatures above and below the melting point of the oily matter has varied to a large extent. It should be appreciated that the capability of increasing the heat conductivity is effectively contributive to the increment in the heat storing and discharging efficiency when the oily matter carrier is employed as the heat storage member. In this case, the fact that the heat conductivity becomes smaller at temperatures above the melting point and larger at temperatures below the melting point is extremely useful as the heat storage member, in contrast to conventional heat storage members which involve a problem that the heat dissipation becomes large at higher temperatures and becomes smaller at lower temperatures.

EXAMPLES 40-49:

Such ethylene-α-olefin copolymers as listed in a following Table VIII were respectively kneaded with the kneader PBV-0.1H of IRIE SHOKAI while being heated at 140°C, such oily matters and inorganic fillers also as listed in Table VIII were added respectively sequentially and gradually so as to be at such compositions as in Table VIII, and the kneading was continued for 20 minutes after the addition of the inorganic filler. Thereafter, thus kneaded melts were respectively molded into the board shape of 200mm long, 200mm wide and 15mm thick while being cooled at the cooling rate of 1°C/minute, whereby various oily matter carriers in which the oily matters and inorganic fillers were uniformly dispersed within the ethylene-α-olefin copolymers were prepared.

TABLE VIII

| Ex.No. | Copolymer A | | Oily Matter | | Inorganic Filler | |
|---|---|---|---|---|---|---|
| | Item No. | Comp.(P.) | Item No. | Comp.(P.) | Item No. | Comp.(P.) |
| 40 | EUL130 | 30 | Paraf. 125 art. | 70 | alumi. hydroxide | 20 |
| 41 | EUL130 | 30 | Paraf. 125 art. | 70 | alumi. hydroxide | 60 |
| 42 | EUL130 | 30 | Paraf. 125 art. | 70 | alumi. hydroxide | 100 |
| 43 | EUL130 | 30 | Paraf. 125 art. | 70 | alumi. hydroxide | 150 |
| 44 | VL100 | 30 | Paraf. 125 art. | 70 | alumi. hydroxide | 60 |
| 45 | VL100 | 30 | Paraf. 125 art. | 70 | magne. hydroxide | 150 |
| 46 | EUL130 | 30 | Butyl stearate | 70 | alumi. hydroxide | 60 |
| 47 | EUL130 | 30 | Butyl stearate | 70 | alumi. hydroxide | 150 |
| 48 | EUL130 | 30 | Paraf. 125 art. | 70 | alumi. hydroxide | 200 |
| 49 | EUL130 | 30 | Paraf. 125 art. | 70 | magne. hydroxide | 100 |

In the above Table VIII, the compositions of the synthetic resin, oily matter and inorganic filler are of the parts by weight. The oily matter carriers prepared as in the above manner of Examples 40-49 were then subjected to the cold and hot test carried out for 200 cycles (1 cycle being 100 minutes) within an atmosphere under such temperature conditions as shown in FIG. 3. After the test, the oily matter carriers

EP 0 481 564 B1

were taken out of the atmosphere, any oil matter exuded out of the carriers at a temperature of 80°C which is above the melting point of the oily matter was wiped off, and the exudation rate of the oily matters was calculated on the basis of the lost weight. The same calculating formula as in the foregoing was employed for the calculation of the exudation, results of which were as shown in a following Table IX. A heat flow measurement was carried out with respect to these oily matter carriers by means of a heat-flow-metry to measure the heat conductivity, and the flammability of the oily matter carriers after elapsing of a predetermined time was tested with a gas burner flame applied against one surface of the board shaped carriers, results of which were as shown in the Table IX.

TABLE IX

| Ex. No. | Exud. Rate(%) | Heat Cond. (Kcal/mh°C) | Flammability (Applying time of gas burner flame:sec.) | | | |
|---|---|---|---|---|---|---|
| | | | 5 | 15 | 20 | 30 |
| 40 | 1.2 | 0.12 | flame | flame | flame | flame |
| 41 | 0.7 | 0.31 | self-disting. | " | " | " |
| 42 | 0.5 | 0.42 | " | self-exting. | " | " |
| 43 | 0.3 | 0.60 | " | " | self-exting. | " |
| 44 | 1.1 | 0.30 | " | flame | flame | " |
| 45 | 0.3 | 0.55 | " | self-exting. | self-exting. | " |
| 46 | 1.7 | 0.31 | " | flame | flame | " |
| 47 | 0.5 | 0.59 | " | self-exting. | self-exting. | " |
| 48 | 0.2 | 0.75 | " | " | " | self-exting. |
| 49 | 0.4 | 0.40 | " | " | flame | flame |

From the above Table IX, it should be appreciated that the exudation rate is lowered by the addition of the inorganic filler so as to be remarkable depending on the composition. Further, it has been found that the heat conductivity is increased by the addition of the inorganic filler in such that, for example, the addition of 100 parts of aluminum hydroxide renders the heat conductivity to be twice as large as that of the oily matter carrier of Example 4 having no inorganic filler added. Further, this oily matter carrier of Example 4 lacking the inorganic filler has burnt within 5 seconds when the gas burner flame was applied, whereas an oily matter carrier of a composition in which 100 parts by weight of metal hydroxide were added to the same composition as that of Example 4, i.e., 30 parts by weight of ethylene-α-olefin copolymer and 70 parts by weight has shown to be self-extinguishing even upon application of the gas burner flame more than 15 seconds while first started to burn when the flame was applied more than 20 seconds. In the case of a composition of 30 parts by weight of ethylene-α-olefin copolymer, 70 parts by weight of the oily matter and 150 parts by weight of a metal oxide, further, the oily matter carrier was self-distinguishing even with the application of the gas burner flame for more than 20 seconds while started to burn after the flame application for more than 30 seconds. Accordingly, it has been found that the flammability can be lowered by the addition of the metal oxide as the inorganic filler or, in other words, the non-flammability can be thereby increased.

EXAMPLES 50-58:

Such copolymers A and copolymers B or polyethylene as listed in a following Table X were kneaded by the kneader PBV-0.1H of IRIE SHOKAI while being heated at 140°C, such oily matters and inorganic filler

15

as listed in Table X were sequentially gradually added respectively, and the kneading was continued for 20 minutes after the addition of the inorganic filler. Thereafter, thus kneaded melts were molded into the board shape of 200mm long, 200mm wide and 15mm thick while being cooled at the cooling rate of 1 °C/minute, and whereby various oily matter carriers in which the oily matter and inorganic filler are uniformly dispersed within the synthetic resin substrate of the copolymer A and copolymer B or polyethylene.

TABLE X

| Ex. No. | Copolymer A Item No. | Copolymer A Comp.(P.) | Copolymer Polyethylene Item No. | Copolymer Polyethylene Comp.(P.) | Oily Matter Type | Oily Matter Comp.(P.) | Inorg. Filler Type | Inorg. Filler Comp.(P.) | Exud. Rate(%) | Heat Cond. (Kcal/mh°C) |
|---|---|---|---|---|---|---|---|---|---|---|
| 50 | Toughmer A4085 | 20 | 6006M | 10 | Paraffin 125 art. | 70 | alumi. hydroxide | 30 | 0.8 | 0.25 |
| 51 | Toughmer PO680 | 20 | F15 | 10 | " | 70 | " | 60 | 0.3 | 0.30 |
| 52 | " | 20 | 6006M | 10 | Butly stearate | 70 | Flaky Al | 10 | 1.1 | 0.38 |
| 53 | " | 20 | 6000M·F15 | 5.5 | " | 70 | " | 20 | 0.3 | 0.55 |
| 54 | " | 7 | 6006M | 25 | Paraffin 125 art. | 68 | Bentonite | 30 | 3.6 | 0.22 |
| 55 | " | 60 | " | 7 | " | 33 | Talc | 30 | 0.1 | 0.22 |
| 56 | " | 8 | " | 7 | " | 85 | Alumina | 30 | 5.8 | 0.22 |
| 57 | " | 20 | ZF150-1 | 10 | Butyl stearate | 70 | Talc | 60 | 0.5 | 0.29 |
| 58 | " | 20 | 6006M | 10 | Paraffin 125 art. | 70 | alumi. hydroxide | 150 | 0.2 | 0.58 |

16

In the above Table X, the compositions of the synthetic resins, oily matter and inorganic filler are of the parts by weight. With respect to these oily matter carriers of Examples 50-58 prepared in the above manner, the cold and hot test has been carried out for 200 cycles (1 cycle being 100 minutes) in the atmosphere under such temperature conditions as shown in FIG. 3. After the test, the carriers were taken out of the atmosphere, any oily matter exuded out of the carrier at the temperature of 80°C which is higher than the melting point of the oily matter was wiped off, and the exudation rate was calculated from the lost weight. The same exudation calculating formula as in the foregoing was employed, and the resultant exudation rates were as shown in Table X. The heat conductivities of these oily matter carriers were measured by means of the heat-flow-metry, results of which were as shown in Table X.

It has been found, as will be clear from Table X, that the oil exudation reduction and the heat conductivity increase are attained in the same manner as in the foregoing Examples 40-49 by the addition of the inorganic filler. In the case of the oily matter carrier of Example 51 in which 60 parts by weight of aluminum hydroxide were added, for example, the self-distinguishing ability was shown even when the gas burner flame was applied for more than 5 seconds and, in the case of the oily matter carrier of Example 58 in which 150 parts by weight of aluminum hydroxide were added, it was still self-distinguishing even upon application of the gas burner flame more that 20 seconds, to be remarkably improved in the non-flammability. In addition, it has been also found that the formation of the substrate with the copolymer A of the density smaller than $0.925 g/cm^3$ and the copolymer B or polyethylene of the density larger than that of copolymer A mixed together has resulted in the excellent form retention.

## Claims

1. A heat storage composition, comprising
   (a) from 23 to 70 wt.% of a substrate comprising an ethylene-α-olefin copolymer "A" having a density less than $0.925 g/cm^3$, and
   (b) from 30 to 77 wt.% of a heat storing member selected from the group consisting of paraffin, aliphatic acid, aliphatic acid ester and mixtures thereof and having a heat of phase transition more than 20 cal/g,
   said heat storing member having a melting point exhibiting a phase transition from a solid phase to a liquid phase and reversible between said solid and liquid phases when used.

2. The composition of claim 1, which further comprises an inorganic filler dispersed within said substrate.

3. The composition of claim 2, wherein said inorganic filler is a metal.

4. The composition of claim 2, wherein said inorganic filler is a metallic hydroxide.

5. The composition of claim 1, wherein said heat storing number is one showing a compatibility with said copolymer "A".

6. The composition of claim 2, wherein said inorganic filler is contained more than 4.5 wt.%.

7. A heat storage composition, comprising
   (a) from 23 to 70 wt.% of a substrate comprising from 5 to 70 wt.% of an ethylene-α-olefin copolymer "A" of a density less than $0.925 g/cm^3$, and from 0 to 65 wt.% of one selected from the group consisting of an ethylene-α-olefin copolymer "B" of a density more than that of said copolymer "A", a medium-density polyethylene and a high-density polyethylene, and
   (b) from 30 to 77 wt.% of a heat storing member selected from the group consisting of paraffin, aliphatic acid, aliphatic acid ester and mixtures thereof and having a heat of phase transition more than 20 cal/g,
   said heat storing member having a melting point exhibiting a phase transition from a solid phase to a liquid phase and reversible between the solid and liquid phases when used.

8. The composition of claim 7, which further comprises an inorganic filler dispersed within said substrate.

9. The composition of claim 8, wherein said inorganic filler is a metal.

10. The composition of claim 8, wherein said inorganic filler is a metallic hydroxide.

**11.** The composition of claim 8, wherein said inorganic filler comprises more than 4.5 wt.%.

**12.** A heat storage composition, comprising

(a) from 10 to 70 wt.% of a substrate comprising from 5 to 70 wt.% of an ethylene-α-olefin copolymer "A" of a density less than 0.88 g/cm$^3$, and from 0 to 65 wt.% of one selected from the group consisting of an ethylene-α-olefin copolymer "B" of a density more than 0.910 g/cm$^3$, medium-density polyethylene and high-density polyethylene, and

(b) from 30 to 90 wt.% of a heat storing member selected from the group consisting of paraffin, aliphatic acid, aliphatic acid ester and mixtures thereof and having a heat of phase transition more than 20 cal/g,

said heat storing member having a melting point exhibiting a phase transition from a solid phase to a liquid phase and reversible between the solid and liquid phases when used.

**13.** The composition of claim 12, wherein said substrate comprises from 23 to 70 wt.%, and said heat storing member comprises from 30 to 77 wt.%.

**14.** The composition of claim 12, which further comprises an inorganic filler dispersed within said substrate.

**15.** The composition of claim 14, wherein said inorganic filler is a metal.

**16.** The composition of claim 14, wherein said inorganic filler is a metallic hydroxide.

**17.** The composition of claim 14, wherein said inorganic filler comprises more than 4.5 wt.%.

**18.** A method for manufacturing a heat storage composition, comprising the steps of:

(a) preparing 23 to 70 wt.% of a substrate of an ethylene-α-olefin copolymer "A" of a density less than 0.925 g/cm$^3$;

(b) mixing 30 to 77 wt.% of a heat storing member with said substrate to form a melt mixture, said heat storing member being selected from the group consisting of paraffin, aliphatic acid, aliphatic acid ester and mixtures thereof, and having a heat of phase transition more than 20 cal/g and a melting point exhibiting a phase transition from a solid phase to a liquid phase and reversible between the solid and liquid phases when used: and

(c) molding said melt mixture into a desired form while cooling the melt mixture.

**19.** The method of claim 18, wherein an inorganic filler is further mixed in said melt mixture of said substrate and said heat storing member.

**20.** A method for manufacturing a heat storage composition, comprising the steps of:

(a) preparing 23 to 70 wt.% of a substrate with 5 to 70 wt.% of an ethylene-α-olefin copolymer "A" of a density less than 0.925 g/cm$^3$ and 0 to 65 wt.% of one selected from the group consisting of an ethylene-α-olefin copolymer "B" of a density more than that of said copolymer "A", a medium-density polyethylene, a high-density polyethylene and mixtures thereof;

(b) mixing 30 to 77 wt.% of a heat storing member with said substrate to form a melt mixture, said heat storing member selected from the group consisting of paraffin, aliphatic acid, aliphatic acid ester and mixtures thereof, and having a heat of phase transition more than 20 cal/g; and

(c) molding said melt mixture into a desired form while cooling the melt mixture.

**21.** The method of claim 20, wherein an inorganic filler is further mixed in said melt mixture of said substrate and said heat storing member.

**22.** A method for manufacturing a heat storage composition, comprising the steps of:

(a) preparing 23 to 77 wt.% of a substrate with 5 to 70 wt.% of an ethylene-α-olefin copolymer "A" of a density less than 0.88 g/cm$^3$, and 0 to 65 wt.% of one selected from the group consisting of an ethylene-α-olefin copolymer "B" of a density more than 0.910 g/cm$^3$, a medium-density polyethylene, a high-density polyethylene and mixtures thereof;

(b) mixing 30 to 77 wt.% of a heat storing member with said substrate to form a melt mixture, said heat storing member heing selected from the group consisting of paraffin, aliphatic acid, aliphatic acid ester and mixtures thereof, and having a heat of phase transition more than 20 cal/g and a melting point exhibiting a phase transition from a solid phase to a liquid phase and reversible between the solid and liquid phases; and

(c) molding said melt mixture into a desired form while cooling the melt mixture.

**Patentansprüche**

1.  Wärmespeichermischung, bestehend aus

    (a) 23 bis 70 Gew.-% eines Substrates, das selbst wiederum aus einem Ethylen-α-Olefin-Copolymer "A" mit einer Dichte unter 0,925 g/cm$^3$ besteht, und

    (b) 30 bis 77 Gew.-% einer wärmespeichernden Komponente auf der Gruppe, zu der Paraffin, Fettsäure, Fettsäureester und Mischungen dieser Stoffe gehören und die eine Phasenübergangswärme von mehr als 20 cal/g haben;

    wobei besagte wärmespeichernde Komponente einen Schmelzpunkt hat, der den Phasenübergang von der festen in die flüssige Phase anzeigt, und wobei diese Phasenübergänge zwischen fest und flüssig im Einsatz reversibel sind.

2.  Mischung nach Anspruch 1, weiterhin bestehend aus einen anorganischen Füllstoff, der innerhalb dem besagten Substrats dispergiert ist.

3.  Mischung nach Anspruch 2, in der besagter anorganischer Füllstoff ein Metall ist.

4.  Mischung nach Anspruch 2, in der besagter anorganischer Füllstoff ein Metallhydroxid ist.

5.  Mischung nach Anspruch 1, in der besagte Wärmespeichermischung eine Mischung ist, die kompatibel mit dem besagten Copolymer "A" ist.

6.  Mischung nach Anspruch 2, in der besagter anorganischer Füllstoff einen Anteil von mehr als 4,5 Gew.-% hat.

7.  Wärmespeichermischung, bestehend aus

    (a) 23 bis 70 Gew.-% eines Substrates, das selbst wiederum zu 5 bis 70 Gew.-% aus einem Ethylen-α-Olefin-Copolymer "A" mit einer Dichte unter 0,925 g/cm$^3$, zu 0 bis 65 Gew.-% aus eine Ethylen-α-Olefin-Copolymer "B" mit einer über der Dichte des besagten Copolymer "A" liegenden Dichte, einem Polyethylen mittlerer Dichte und einem Polyethylen hoher Dichte besteht, und

    (b) 30 bis 77 Gew.-% einer wärmespeichernden Komponente aus der Gruppe, zu der Paraffin, Fettsäure, Fettsäureester und Mischungen dieser Stoffe gehören und die eine Phasenübergangswärme von mehr als 20 cal/g haben;

    wobei besagte wärmespeichernde Komponenten einen Schmelzpunkt haben, der den Phasenübergang von der festen in die flüssige Phase anzeigt, und wobei diese Phasenübergänge zwischen fest und flüssig im Einsatz reversibel sind.

8.  Mischung nach Anspruch 7, weiterhin bestehend aus einem anorganischen Füllstoff, der innerhalb des besagten Substrats dispergiert ist.

9.  Mischung nach Anspruch 8, in der besagter anorganischer Füllstoff ein Metall ist.

10. Mischung nach Anspruch 8, in der besagter anorganischer Füllstoff ein Metallhydroxid ist.

11. Mischung nach Anspruch 8, in der besagter anorganischer Füllstoff einen Anteil von mehr als 4,5 Gew.-% hat.

12. Wärmespeichermischung, bestehend aus

    (a) 10 bis 70 Gew.-% eines Substrates, das selbst wiederum zu 5 bis 70 Gew.-% aus einem Ethylen-α-Olefin-Copolymer "A" mit einer Dichte unter 0,88 g/cm$^3$, zu 0 bis 65 Gew.-% aus eine Ethylen-α-Olefin-Copolymer "B" mit einer über 0,910 g/cm$^3$ liegenden Dichte, einem Polyethylen mittlerer Dichte und einem Polyethylen hoher Dichte besteht, und

    (b) 30 bis 90 Gew.-% einem wärmespeichernden Komponente aus der Gruppe, zu der Paraffin, Fettsäure, Fettsäureester und Mischungen dieser Stoffe gehören und die eine Phasenübergangswärme von mehr als 20 cal/g hat;

wobei besagte wärmespeichernde Komponente einen Schmelzpunkt hat, der den Phasenübergang von der festen in die flüssige Phase anzeigt, und wobei diese Phasenübergänge zwischen fest und flüssig im Einsatz reversibel sind.

13. Wärmespeichermischung nach Anspruch 12, in der das besagte Substrat einen Anteil zwischen 23 und 70 Gew.-% und die besagte wärmespeichernde Komponente einen Ansteil zwischen 30 und 77 Gew.-% haben.

14. Mischung nach Anspruch 12, weiterhin bestehend aus einem anorganischen Füllstoff, der innerhalb des besagten Substrats dispergiert ist.

15. Mischung nach Anspruch 14, in der besagter anorganischer Füllstoff ein Metall ist.

16. Mischung nach Anspruch 14, in der besagter anorganischer Füllstoff ein Metallhydroxid ist.

17. Mischung nach Anspruch 14, in der besagter anorganischer Füllstoff einen Anteil von mehr als 4,5 Gew.-% hat.

18. Methode zur Herstellung einer Wärmespeichermischung, bestehend aus den folgenden Stufen:

(a) Herstellung von 23 bis 70 Gew.-% eines Substrates aus eine Ethylen-$\alpha$-Olefin-Copolymer "A" mit einer Dichte von weniger als 0,925 g/cm$^3$;

(b) Mischen von 30 bis 77 Gew.-% einer wärmespeichernden Komponente mit dem besagten Substrat zur Bildung einer Schmelzmischung;

wobei besagte wärmespeichernde Komponente aus der Gruppe gewählt wird, zu der Paraffin, Fettsäure, Fettsäureester und Mischungen dieser Stoffe gehören und eine Phasenübergangswärme von mehr als 20 cal/g sowie einen Schmelzpunkt hat, der den Phasenübergang von der festen in die flüssige Phase anzeigt, und wobei diese Phasenübergange zwischen fest und flüssig im Einsatz reversibel sind; und

(c) Gießen der besagten Schmelzmischung in eine gewünschte Form bei gleichzeitiger Abkühlung der Schmelzmischung.

19. Methode nach Anspruch 18, wobei weiterhin ein anorganischer Füllstoff in die besagte Schmelzmischung aus dem besagten Substrat und der besagten wärmespeichernden Komponente gemischt wird.

20. Methode zur Herstellung einer Wärmespeichermischung, bestehend aus den folgenden Stufen:

(a) Herstellung von 23 bis 70 Gew.-% eines Substrats, das selbst wiederum zu 5 bis 70 Gew.-% aus einem Ethylen-$\alpha$-Olefin-Copolymer "A" mit einer Dichte unter 0,925 g/cm$^3$, zu 0 bis 65 Gew.-% aus einem Ethylen-$\alpha$-Olefin-Copolymer "B" mit einer über der Dichte des besagten Copolymer "A" liegenden Dichte, eine Polyethylen mittlerer Dichte, einem Polyethylen hoher Dichte und Mischungen aus diesen besteht;

(b) Mischen von 30 bis 77 Gew.-% einer wärmespeichernden Komponente mit besagtem Substrat zur Herstellung einer Schmelzmischung;

wobei besagte wärmespeichernde Komponente aus der Gruppe gewählt wird, zu der Paraffin, Fettsäure, Fettsäureester und Mischungen dieser Stoffe gehören und eine Phasenübergangswärme von mehr als 20 cal/g hat

(c) Gießen besagter Schmelzmischung in eine gewünschte Form bei gleichzeitiger Abkühlung der Schmelzmischung.

21. Methode nach Anspruch 20, wobei weiterhin ein anorganischer Füllstoff in die besagte Schmelzmischung aus dem besagten Substrat und der besagten wärmespeichernden Komponente gemischt wird.

22. Methode zur Herstellung einer Wärmespeichermischung, bestehend aus den folgenden Stufen:

(a) Herstellung von 23 bis 77 Gew.-% eines Substrates, das selbst wiederum zu 5 bis 70 Gew.-% aus einem Ethylen-$\alpha$-Olefin-Copolymer "A" mit einer Dichte unter 0,88 g/cm$^3$, zu 0 bis 63 Gew.-% aus einem Ethylen-$\alpha$-Olefin-Copolymer "B" mit einer über 0,910 g/cm$^3$ liegenden Dichte, eine Polyethylen mittlerer Dichte, einem Polyethylen hoher Dichte und Mischungen aus diesen besteht; und

EP 0 481 564 B1

(b) Mischen von 30 bis 77 Gew.-% einer wärmespeichernden Komponente mit besagtem Substrat zur Herstellung einer Schmelzmischung;
wobei besagte wärmespeichernde Komponente aus der Gruppe gewählt wird, zu der Paraffin, Fettsäure, Fettsäureester und Mischungen dieser Stoffe gehören und eine Phasenübergangswärme von mehr als 20 cal/g sowie einen Schmelzpunkt hat, der den Phasenübergang von der festen in die flüssige Phase anzeigt, und wobei diese Phasenübergänge zwischen fest und flüssig reversibel sind; und
(c) Gießen besagter Schmelzmischung in eine gewünschte Form bei gleichzeitiger Abkühlung der Schmelzmischung.

**Revendications**

1. Composition d'accumulation thermique comprenant
   (a) de 23 à 70 % en poids d'un substrat constitué par un copolymère éthylène-$\alpha$-oléfine "A" ayant une densité inférieure à 0,925 g/cm$^3$; et
   (b) de 30 à 77 % an poids d'un élément d'accumulation thermique choisi dans le groupe constitué par la paraffine, l'acide aliphatique, l'ester de l'acide aliphatique et leurs mélanges et ayant une chaleur de transition de phase supérieure à 20 cal/g,
       cet élément d'accumulation thermique ayant un point de fusion présentant une transition de phase allant de la phase solide à la phase liquide et réversible entre les phases solide et liquide lors de l'utilisation.

2. Composition selon la revendication 1, comprenant de plus une matière de charge minérale dispersée à l'intérieur de ce substrat.

3. Composition selon la revendication 2, dans laquelle la matière de charge minérale est un métal.

4. Composition selon la revendication 2, dans laquelle la matière de charge minérale est un hydroxyde métallique.

5. Composition selon la revendication 1, dans laquelle l'élément de stockage thermique est un élément manifestant une compatibilité avec le polymère "A".

6. Composition selon la revendication 2, dans laquelle la matière de charge minérale est contenue dans une quantité supérieure à 4,5 % en poids.

7. Composition d'accumulation thermique, comprenant
   (a) de 23 à 70 % en poids d'un substrat comprenant de 5 à 70 % en poids d'un copolymère éthylène-$\alpha$-oléfine "A" d'une densité inférieure à 0,925 g/cm$^3$, et de 0 à 65 % en poids choisi dans le groupe constitué par un copolymère éthylène-$\alpha$-oléfine "B" d'une densité supérieure à celle du copolymère "A", un polyéthylène à densité moyenne et un polyéthylène à forte densité ; et
   (b) de 30 à 77 % en poids d'un élément d'accumulation thermique choisi dans le groupe constitué par la paraffine, l'acide aliphatique, l'ester de l'acide aliphatique et ses mélanges et ayant une chaleur de transition de phase supérieure à 20 cal/g,
       cet élément d'accumulation thermique ayant un point de fusion présentant une transition de phase allant de la phase solide à la phase liquide et réversible entre les phases solide et liquide lors de l'utilisation.

8. Composition selon la revendication 7, qui comprend de plus une matière de charge minérale dispersée dans le substrat.

9. Composition selon la revendication 8, dans laquelle la matière de charge minérale est un métal.

10. Composition selon la revendication 8, dans laquelle la matière de charge minérale est un hydroxyde métallique.

11. Composition selon la revendication 8, dans laquelle la matière de charge minérale comprend plus de 4,5 % en poids.

21

**12.** Composition d'accumulation thermique, comprenant

(a) de 10 à 70 % en poids d'un substrat constitué par 5 à 70 % en poids d'un copolymère d'éthylène-α-oléfine "A" d'une densité inférieure à 0,88 g/cm$^3$, et de 0 à 65 % en poids choisi dans le groupe constitué par le copolymère éthylène-α-oléfine "B" d'une densité supérieure à 0,910 g/cm$^3$, un polyéthylène de densité moyenne et un polyéthylène de haute densité ; et

(b) de 30 à 90 % en poids d'un élément d'accumulation thermique choisi dans le groupe constitué par la paraffine, l'acide aliphatique, l'ester de l'acide aliphatique et leurs mélanges et ayant une chaleur de transition de phase supérieure à 20 cal/g,

cet élément d'accumulation thermique ayant un point de fusion présentant une transition de phase allant de la phase solide à la phase liquide et réversible entre les phases solide et liquide lors de l'utilisation.

**13.** Composition selon la revendication 12, dans laquelle le substrat comprend de 23 à 70 % en poids et l'élément d'accumulation thermique comprend de 30 à 77 % en poids.

**14.** Composition selon la revendication 12, qui comprend de plus une matière de charge minérale dispersée dans le substrat.

**15.** Composition selon la revendication 14, dans laquelle la matière de charge minérale est un métal.

**16.** Composition selon la revendication 14, dans laquelle la matière de charge minérale est un hydroxyde métallique.

**17.** Composition selon la revendication 14, dans laquelle la matière de charge minérale comprend plus de 4,5 % en poids.

**18.** Procédé pour la fabrication d'une composition d'accumulation thermique, comprenant les étapes consistant à :

(a) préparer 23 à 70 % en poids d'un substrat d'un copolymère éthylène-α-oléfine "A" d'une densité inférieure à 0,925 g/cm$^3$ ;

(b) mélanger 30 à 77 % en poids d'un élément d'accumulation thermique avec le substrat pour former un mélange de fusion,

l'élément d'accumulation thermique étant choisi dans le groupe constitué par la paraffine, l'acide aliphatique, l'ester de l'acide aliphatique et leurs mélanges et ayant une chaleur de transition de phase supérieure à 20 cal/g, et un point de fusion présentant une transition de phase allant de la phase solide à la phase liquide et réversible entre les phases solide et liquide lors de l'utilisation ; et

(c) mouler le mélange de fusion à la forme souhaitée tout en refroidissant ce mélange de fusion.

**19.** Procédé selon la revendication 18, dans lequel on mélange davantage la matière de charge minérale dans le mélange de fusion du substrat et l'élément d'accumulation thermique.

**20.** Procédé pour la fabrication d'une composition d'accumulation thermique, comprenant les étapes consistant à :

(a) préparer 23 à 70 % en poids d'un substrat avec 5 à 70 % en poids d'un copolymère éthylène-α-oléfine "A" d'une densité inférieure à 0,925 g/cm$^3$, et 0 à 65 % en poids choisi dans le groupe constitué par un copolymère éthylène-α-oléfine "B" d'une densité supérieure à celle du copolymère "A", un polyéthylène de densité moyenne, un polyéthylène de densité élevée et leurs mélanges ;

(b) mélanger 30 à 77 % en poids d'un élément d'accumulation thermique avec le substrat pour former un mélange de fusion,

élément d'accumulation thermique choisi dans le groupe constitué par la paraffine, l'acide aliphatique, l'ester de l'acide aliphatique et leurs mélanges et ayant une chaleur de transition de phase supérieure à 20 cal/g ; et

(c) mouler le mélange de fusion à la forme souhaitée tout en refroidissant le mélange de fusion.

**21.** Procédé selon la revendication 20, dans lequel on mélange davantage un agent de charge minérale dans le mélange de fusion du substrat et dans l'élément d'accumulation thermique.

**22.** Procédé pour la fabrication d'une composition d'accumulation thermique, comprenant les étapes consistant à :

(a) préparer 23 à 77 % en poids d'un substrat avec 5 à 70 % en poids d'un copolymère éthylène-$\alpha$-oléfine "A" d'une densité inférieure à 0,88 g/cm$^3$, et 0 à 65 % en poids choisi à partir du groupe constitué par un copolymère éthylène-$\alpha$-oléfine "B" d'une densité supérieure à 0,910 g/cm$^3$, un polyéthylène de densité moyenne, un polyéthylène de densité élevée et leurs mélanges ;

(b) mélanger 30 à 77 % en poids d'un élément d'accumulation thermique avec le substrat pour former un mélange de fusion,

l'élément d'accumulation thermique étant choisi dans le groupe constitué par la paraffine, l'acide aliphatique, l'ester de l'acide aliphatique et leurs mélanges et ayant une chaleur de transition de phase supérieure à 20 cal/g et un point de fusion présentant une transition de phase allant de la phase solide à la phase liquide et réversible entre les phases solide et liquide ; et

(c) mouler le mélange de fusion à la forme souhaitée tout en refroidissant ce mélange de fusion.

Fig.1

Fig. 2

# Fig. 3